(19) Europäisches Patentamt
European Patent Office
Office européen des brevets

(11) **EP 4 197 617 A1**

(12) **EUROPEAN PATENT APPLICATION**

(43) Date of publication:
**21.06.2023 Bulletin 2023/25**

(21) Application number: **21216098.0**

(22) Date of filing: **20.12.2021**

(51) International Patent Classification (IPC):
**B01D 46/00** (2022.01)   **B01D 35/143** (2006.01)
**B01D 37/04** (2006.01)   **B01D 46/44** (2006.01)

(52) Cooperative Patent Classification (CPC):
**B01D 46/0086; B01D 46/444; B01D 46/446;**
A47L 9/00; B01D 35/143; B01D 37/043;
B01D 37/046

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Versuni Holding B.V.
5656 AE Eindhoven (NL)**

(72) Inventors:
• **BOONSTRA, Bonne Lambert**
  **5656 AE Eindhoven (NL)**
• **VAN DER KOOI, Johannes Tseard**
  **5656 AE Eindhoven (NL)**

(74) Representative: **Vollering, Stefanus Franciscus
Maria
Philips Domestic Appliances IP Department
High Tech Campus 42
5656 AE Eindhoven (NL)**

(54) **FILTER CLEANING OF AN AIR TREATMENT DEVICE**

(57)    A system is provided for indicating when an air treatment device filter should be cleaned. A parameter of the air treatment device is monitored which correlates with a flow rate through the air treatment device. A first pressure is measured upstream of the filter. Based on the parameter, the measured first pressure and pressure-flow characteristics of the air treatment device fan and the flow path components downstream of the filter, an output is provided which indicates a need for filter cleaning. This depends on the pressure drop across the filter and the flow rate through the filter.

FIG. 8

EP 4 197 617 A1

**Description**

FIELD OF THE INVENTION

This invention relates to air treatment devices which include a filter which has to be periodically changed or cleaned.

BACKGROUND OF THE INVENTION

There are various devices in which an airflow is driven through a filter, and the filter needs to be cleaned or replaced periodically. Examples are air cleaners, air conditioning systems, cooker hoods and systems for delivering breathing air via a patient mask.

One application of particular interest is vacuum cleaners. Most vacuum cleaners contain filters to purify the air by removing solid particles from the air flow through the vacuum cleaner. This functionality causes the filters to become polluted. The air flow resistance of a filter will increase when the filter becomes more polluted. As a result, the energy dissipation through the filter will increase and a reduced amount of energy is available for the cleaning function. Thus, the performance of the vacuum cleaner is better when the filter is clean.

Many vacuum cleaner designs require the user to perform maintenance on the filters (because the lifetime of the vacuum cleaner is longer than the lifetime of the filters). The filters must typically be cleaned or replaced on a regular basis to ensure that the vacuum cleaner maintains its suction power.

Users for example generally decide to perform filter maintenance when they notice that the cleaning performance of the vacuum cleaner is dropping. However, many users do not appreciate that they must perform filter maintenance at all, and therefore they tend to replace the vacuum cleaner when they notice a significant decrease in suction power, when in fact only filter cleaning is required.

With conventional dust bag vacuum cleaners, it may be acceptable to replace the entire appliance, since it may take years for the filters to become clogged. However, this does not apply to bag-less vacuum cleaners. In a bag-less vacuum cleaner, the separation of the dust from the air flow is implemented using a cyclonic separator instead of a dust bag. The separation performance of a cyclone is not as good as a conventional dust bag, with the result that the filters in bag-less vacuum cleaners often become clogged much faster. Therefore, a noticeable reduction in suction power typically already happens within a much shorter period, for example within the warranty period. There is also more chance of cyclone malfunction than dust bag malfunction, due to overloading.

With the current trend towards battery-operated stick vacuum cleaners which less power available, the performance decrease has a greater and earlier impact.

If the user does not realize that this reduction in suction power is caused by a clogged filter, or continues to use the vacuum cleaner until there is a malfunction. the user may make a service or repair request under the warranty, which could have been avoided.

It is known to monitor the air flow conditions through a filter in order to detect filter clogging, so that an alert can be given to a user when the filter needs maintenance. For example, it is known to use a pressure switch to react to the pressure difference across the filter. However, at varying flow rates, the pressure difference does not relate directly to the level of filter pollution. Simply reacting to a pressure difference does not take account of different use cases, such as when changing a power setting or for different types of floor surface.

WO 2015/078672 discloses a method of monitoring the air filter pollution, for example in a vacuum cleaner, by monitoring air flow conditions associated with the fan that drives the air flow as well as monitoring the pressure difference across the filter. In particular, a pressure difference across the fan and a drive current of the motor that drives the fan are monitored. This enables a flow prediction to be made, and the combination of the flow prediction and the pressure drop across the filter enables a parameter to be derived related to the filter resistance, and thus the pollution.

However, this approach requires two pressure differences to be measured (one at the fan/motor and one at the filter), and hence four pressure monitoring points. Each pressure monitoring point and sensor adds cost and complexity making the vacuum cleaner less robust.

It would be desirable to be able to monitor filter resistance, and hence a level of filter clogging, with simplified sensing hardware.

SUMMARY OF THE INVENTION

The invention is defined by the claims.

According to examples in accordance with an aspect of the invention, there is provided a system for indicating when a filter of an air treatment device should be cleaned, comprising:

an arrangement for monitoring a parameter of the air treatment device which correlates with a flow rate through the air treatment device, said flow being generated by a fan and motor arrangement;

a pressure sensor for measuring a first pressure, upstream of the filter;

a memory storing pressure-flow characteristics relating to the path downstream of the filter; and

a processor adapted to:

combine the monitored parameter, the measured first pressure and the pressure-flow characteristics, based on an assumed fan and motor performance and a flow resistance of any components, other than the fan and motor arrangement, downstream of the filter, to provide an output which indicates a need for filter cleaning.

The need for filter cleaning depends on a pressure drop across the filter.

The pressure-flow characteristics for example comprise the fan QH characteristics. As part of the processing by the processor, the pressure drop across the filter can be derived by processing the parameter to obtain flow characteristics, and establishing a virtual second pressure point using the flow characteristics and an assumed downstream resistance. A pressure difference can then be obtained across the filter.

The pressure-flow characteristics for example relate (i) the parameter and the first measured pressure to (ii) a filter performance level. This relationship is via virtual pressure measurement point downstream of the filter.

The filter performance can for example be established from a pressure drop between the first (real) and second (virtual) pressure points. However, the pressure at the virtual second pressure point may simply be an intermediate processing value, and the only required output from the processor is the output which indicates a need for filter cleaning.

The invention may be applied generally to an any air treatment device having a filter that needs periodic cleaning or replacement.

The invention is of particular interest for a vacuum cleaner, in particular a bag-less vacuum cleaner. A vacuum cleaner has the particular problem that the air inlet has a variable resistance, since the nozzle may be applied to different surfaces and different nozzles have different flow resistance. This means that flow resistance measurements, for detecting filter clogging, need to distinguish between internal flow resistances (the variable one being mainly the filter) and external flow resistances (the variable one being mainly the attachments fitted to the nozzle and the surface against which the nozzle is, or is not, pressed).

By monitoring one or more parameters which correlate with the fan flow rate, the current flow rate may be obtained. The pressure-flow characteristics and the assumption of the resistance of the components downstream of the filter are used to derive a virtual pressure measurement downstream of the filter. In particular, the assumed resistance and the current flow rate together enable a pressure difference to be determined across the assumed flow resistance downstream of the filter to the ambient external pressure.

In some cases, it can be assumed that the components downstream of the filter have constant flow resistance over time (i.e. there are no filters which become clogged over time downstream of the fan/motor arrangement (known as the aggregate). If there are exhaust filters that become polluted, additional measures may be taken to distinguish between clogging of the main filter and clogging of an exhaust filter. For example, if cleaning of the main filter does not remedy the performance as expected, an exhaust filter may be assumed to be clogged.

In this way, the pressure drop across the filter (which thereby enables the internal flow resistance of the filter to be separated from external flow resistances such as at the nozzle) may be derived from only a single real pressure measurement, upstream of the filter. This reduces the cost of the sensing function by requiring a single pressure measurement point to obtain a differential pressure measurement. The pressure drop across the filter does not need to be generated as an actual value, since the processing may pass directly from the input parameters to the output clogging indication. The flow rate and the virtual pressure estimate are thus simply used to explain the concepts underlying the processing that is able to reach a clogged filter assessment from the inputs to the processor (i.e. the parameter(s), pressure measurement and pressure-flow characteristics).

To explain further the concept behind the processing, the processor is for example adapted to:

estimate a flow rate from the parameter;

derive an estimate of a second pressure, downstream of the filter, based on the assumed flow resistance downstream of the filter and from the estimated flow rate;

derive a pressure drop across the filter from the first pressure measurement and the estimated second pressure; and analyze the derived pressure drop and the estimated flow rate to provide an output which indicates a need for filter cleaning.

This explains the internal processing concept that is applied to result in the output. However, in practice, the parameter values (estimated flow rate, estimated second pressure, pressure drop) are only intermediate parameter values, which may or may not actually be calculated. The concept is that parameter(s) in combination with the pressure-flow characteristics are able to deliver a flow rate and pressure drop over the fan. When knowing the downstream pressure drop after the fan (based on the assumed flow resistance), the pressure upstream of the fan can be estimated.

In combination, the estimate of flow rate and derivation of a pressure drop enables a relationship between them to be monitored. This relationship is found to change over time in a predictable way with filter clogging. Thus, by monitoring the relationship, the level of filter clogging is detected and a filter cleaning indication can be provided. The relationship may for example be monitored by detecting crossing points when one or more thresholds are crossed.

The parameter for example comprises a parameter relating to motor drive characteristics, such as a fan rotation speed of the air treatment device. The rotation speed varies with flow rate in a known way for a given fan power level so the rotation speed provides a proxy measurement of flow rate.

The pressure-flow characteristics for example comprise a set of pressure-flow characteristics for different power settings of the air treatment device, and the processor is adapted to receive a power setting of the air treatment device and combine the monitored parameter, the measured first pressure and the pressure-flow characteristics for the particular power setting, to provide the output which indicates a need for filter cleaning.

The air treatment device may have only one power setting, which may then be factored into the pressure-flow characteristics. If different power settings are provided, the power setting influences the relationship between the pressure-flow characteristics and the parameter.

The power setting of the air treatment device is for example a constant input power setting to a motor of the air treatment device. As a result, current monitoring cannot be used to derive flow information. Instead, the known power level and the parameter (e.g. rotation speed) are used.

The memory preferably also stores a pressure relationship between the downstream pressure and the parameter which takes into account the assumed flow resistance downstream of the filter, and the processor is adapted to estimate the downstream pressure using the relationship between the downstream pressure and the parameter.

In general, the processor may be adapted to derive a pressure drop across the filter and a flow rate. The processor may be adapted to indicate a need for filter cleaning when the pressure drop reaches a first threshold function between the pressure drop and the flow rate. This provides comparison with a threshold to determine when filter cleaning is needed.

In particular, the function may relate to the resistance (flow rate divided by pressure drop). When the resistance is above a set threshold, a trigger may be given to perform filter maintenance.

The processor may be adapted to end the indication of a need for filter cleaning when the pressure drop returns to a second threshold function between the pressure drop and the flow rate.

In this way, hysteresis is built into the function which sets the indicator advising of the need for filter cleaning. The first and second threshold functions between the pressure drop and the flow rate preferably also take into account the plurality of different power settings of the air treatment device (when the air treatment device has such power settings).

The processor may be adapted to indicate a need for filter replacement if, after filter cleaning, the pressure drop has not returned to the second threshold function. This may instead indicate that a downstream exhaust filter (if there is one) needs to be cleaned or replaced.

The invention also provides a bag-less vacuum cleaner comprising:

> a motor;
> a cyclonic dust separator;
> a filter;
> a filter full output indicator; and
> the system define above for controlling the filter full indicator.

The components downstream of the filter for example have a relatively constant flow resistance over time. This enables the filter downstream pressure to be derived from the motor drive characteristics.

The motor for example comprises a brushless DC motor. This means no filter is needed downstream of the motor for carbon filtering which in turn means the flow resistance downstream of the filter can be assumed to be constant over time.

The invention also provides a method for indicating when a filter of an air treatment device should be cleaned, comprising:

> monitoring a parameter of the air treatment device which correlates with a flow rate through the air treatment device, said flow being generated by a fan and motor arrangement;
> measuring a first pressure, upstream of the filter;
> combining the parameter, the measured first pressure and the pressure-flow characteristics, based on an assumed flow resistance of any components, other than the fan and motor arrangement, downstream of the filter, to provide an output which indicates a need for filter cleaning.

The pressure-flow characteristics for example comprise characteristics for each of a plurality of different power settings of the air treatment device, and the method comprises receiving a power setting of the air treatment device. These characteristics may be formed as look up tables, or as functions.

The invention also provides a computer program comprising computer program code which is adapted, when said program is run on a computer, to implement the method defined above.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figure 1 shows a known cyclonic vacuum cleaner;.
Figure 2 shows the components in the flow path through the vacuum cleaner;
Figure 3 shows experimental results of a vacuum cleaner aggregate at three different power settings, showing the rotational speed versus the flow rate;
Figure 4 shows experimental results for the pressure upstream of the filter versus the flow rate at three different power settings;
Figure 5 shows experimental results of measurements, plotting pressure difference versus flow rate for a full filter and for a clean filter;
Figure 6 shows an example of a trigger algorithm;
Figure 7 shows another example of a trigger algorithm;
Figure 8 shows a system for indicating when a filter of a vacuum cleaner should be cleaned;
Figure 9 shows a method for indicating when a filter of a vacuum cleaner should be cleaned;
Figure 10 shows an air treatment device in the form of an air cleaner;
Figure 11 shows an air treatment device in the form of a heating, ventilation and air conditioning system; and
Figure 12 shows an air treatment device in the form of a continuous positive airway pressure device.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a system for indicating when a filter of an air treatment device should be cleaned. A parameter of the air treatment device is monitored which correlates with a flow rate through the air treatment device. This may for example be a drive parameter relating to the way the fan is driven. A first pressure is measured upstream of the filter. Based on the parameter, the measured first pressure and pressure-flow characteristics of the air treatment device fan and the flow path components downstream of the filter, an output is provided which indicates a need for filter cleaning. This depends on the pressure drop across the filter and the flow rate through the filter.

The invention is of particular interest for vacuum cleaners. The invention then provides a system and method for indicating when the filter of a vacuum cleaner should be cleaned.

The invention will now be described in detail with reference to the preferred application to the field of vacuum cleaners. Other possible applications of the invention will be described thereafter.

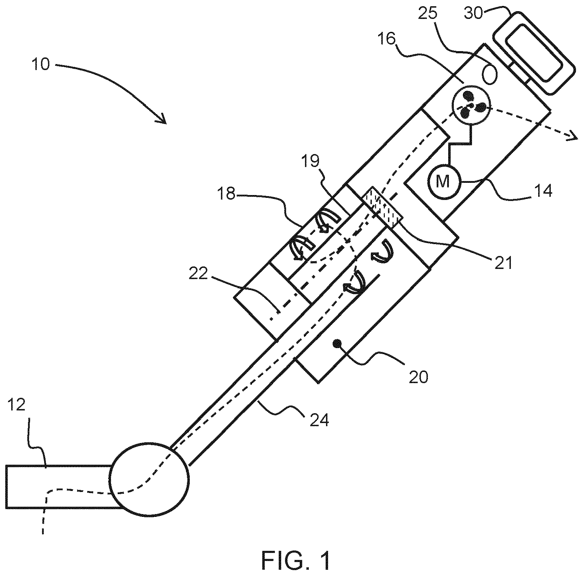

Figure 1 shows a known bag-less cyclonic vacuum cleaner 10, comprising a vacuum cleaner head 12, and a motor 14 and a fan 16 for delivering suction to the vacuum cleaner head. The assembly of the fan and motor is known as the aggregate.

A cyclone unit 18 is provided for separating particles from a flow generated by the suction of the aggregate. The cyclone unit has a vortex finder 19 around which a helical flow is generated, and this flow occupies an annular space around the vortex finder.

The cyclone unit 18 is in this example part of a dry dirt management system, which may include additional filters. The dirt management system has a collection chamber 20 for collecting the separated dirt. This may be an internal part of the cyclone unit or there may be a separate collection reservoir to which the cyclone unit connects. An outlet filter 21 is provided between the outlet flow of the cyclone unit and the aggregate as shown.

The cyclone unit has a cyclone axis of rotation 22 extending through the vortex finder. This axis 22 may be aligned parallel with the general length axis of the vacuum cleaner (as in the case in Figure 1), but it may equally be transverse to the length axis.

The vacuum cleaner head 12 is connected to the cyclone unit 18 by a delivery duct 24. This defines the direction in which air is delivered to the cyclone unit, in particular to the annular space surrounding the vortex finder.

Figure 1 also shows a filter full output indicator 25 for indicating to the user that filter 21 needs to be cleaned or replaced. There is a handle 30 at the opposite end to the head 12.

The vacuum cleaner shown is a battery-operated stick vacuum cleaner. In use, the head 12 forms the only contact with the surface to be vacuumed. Of course, the invention may be applied to a plug-in upright vacuum cleaner or a canister vacuum cleaner.

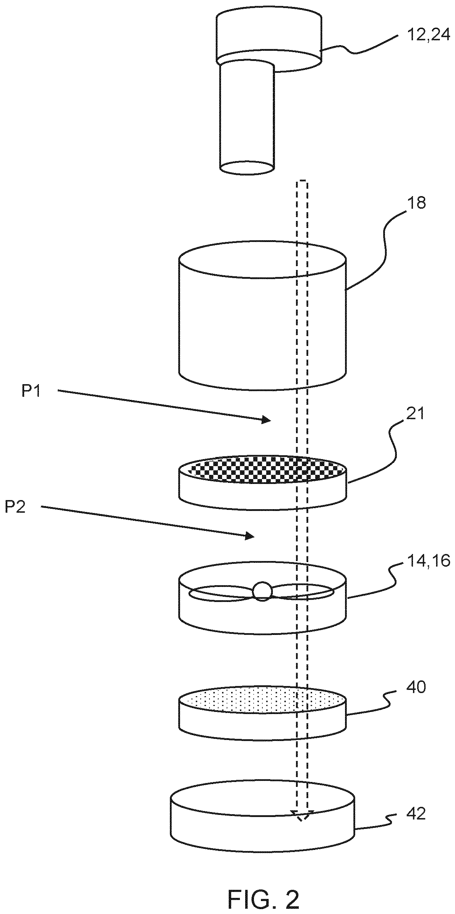

Figure 2 shows the components in the flow path through the vacuum cleaner. The components comprise the vacuum cleaner head and tube 12,24, the cyclone unit 18, the main filter 21 (which is the one to be maintained), and the aggregate 14,16. There is optionally also a second filter 40 downstream of the aggregate 14,16 and a casing 42. This second filter may be included downstream of the aggregate to filter particles generated by the motor (e.g. carbon particles in case of a brushed motor). However, even with a second filter, the flow resistance remains relatively constant over time, compared to the change in filter resistance of the main filter 21.

There is a first pressure P1 upstream of the filter 21 and a second pressure P2 downstream of the filter.

The approach of the invention is based in part on the assumption that the flow resistance of the other components downstream of the aggregate is constant, and this assumption is used to enable a pressure difference across the filter to be derived from a measurement at a single pressure point, in particular a single pressure measurement of the pressure P1 upstream of the filter.

In particular, a single pressure sensor is provided for measuring the first pressure PI, upstream of the filter. Pressure-flow characteristics for the fan 16 and for the path downstream of the filter are stored (or accessed) in a memory. For example, the pressure-flow characteristics may be provided as a flow performance function which relates the flow rate to a monitored parameter which correlates with the flow rate. The flow rate can then be obtained from the parameter using the flow performance function, and an estimate can then be derived of the second pressure P2, downstream of the filter, based on an assumed flow resistance downstream of the filter and from estimated flow rate (which is obtained from the flow performance function). A pressure drop across the filter can then be obtained. The flow resistance of the filter is the ratio between the pressure drop and the flow rate. By monitoring this flow resistance over time, for example by comparing the flow resistance with a threshold, an output is generated which indicates a need for filter cleaning based on the monitored relationship.

In general, the flow rate that is generated by the vacuum cleaner is determined by the electrical input power, fan performance characteristics and motor performance characteristics, and the total air flow resistance of the entire system.

During operation of the vacuum cleaner, the air flow resistance of the entire system (and hence the flow rate) may change during operation. Considering the entire flow system, it is possible to distinguish between two types of air flow resistances; internal air flow resistance, i.e. within the vacuum cleaner device and external air flow resistance, such as the resistance applied to the inlet of the vacuum cleaner.

A change in external air flow resistance is related to the vacuum cleaning appendage configuration (tube connection, tube length setting, connection or disconnection of a nozzle to the tube, nozzle type etc.) and its connection to the surface and the properties of the surface (hard floor, carpet, etc.). A change in internal air flow resistance is related to the pollution of the filter. Therefore, in order to determine a level of filter clogging, monitoring the internal resistance (only) is required.

To distinguish between internal and external air flow resistance, one approach is to provide pressure sensing across the filter, as has been proposed in the past. This is typically implemented using a differential pressure sensor, i.e. with two pressuring sensing points.

When the aggregate is operating at a steady state condition, i.e. rotating at a constant rotational speed, a functional relationship exists between the electric input power, the rotational speed, and the flow rate. The existence of this relationship is demonstrated by the equation that describes the relation between the electric power provided to the motor and the suction power that is generated by the fan:

$$\text{Eq. 1} \qquad P_{el}(Q_{fan}, \omega) = \frac{\Delta p_{fan}(Q_{fan}, \omega) \cdot Q_{fan}}{\eta_{total}(Q_{fan}, \omega)}$$

To obtain an analytical relation for the flow rate as a function of the rotational speed and electric power, experiments can be conducted, or standard available motor and fan data can be used. This equation shows that the rotation speed correlates with a flow rate through the vacuum cleaner. In addition, the correlation between these two parameters is different for different electrical powers, and hence different power settings of a vacuum cleaner.

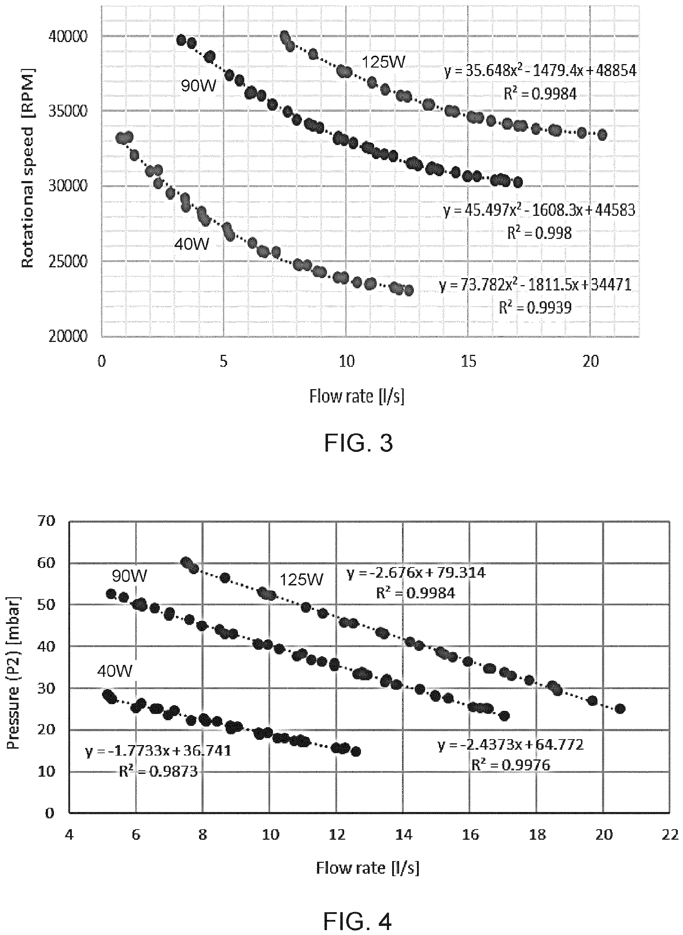

Figure 3 shows experimental results of a vacuum cleaner aggregate at three different power settings, showing the rotational speed versus the flow rate. The plots are for power settings of 40W, 90W and 125W.

In this case the relation between the rotational speed and flow rate can be fitted with a quadratic polynomial where the coefficients are functions of the power setting:

$$\text{Eq. 2} \qquad \omega(P_{el}, Q_{fan}) = a(P_{el}) \cdot Q_{fan}^2 + b(P_{el}) \cdot Q_{fan} + c(P_{el})$$

Solving for the flow rate gives the following analytical solution:

$$\text{Eq. 3} \qquad Q_{fan}(P_{el}, \omega) = A(P_{el}) + B(P_{el}) \cdot \sqrt{C(P_{el}) + D(P_{el}) \cdot \omega}$$

The coefficients of Eq. 3 can be computed from the coefficients of Eq. 2 using:

$$A(P_{el}) = -\frac{b(P_{el})}{2 \cdot a(P_{el})}$$

$$B(P_{el}) = -\frac{1}{2 \cdot a(P_{el})}$$

$$C(P_{el}) = b(P_{el})^2 - 4 \cdot a(P_{el}) \cdot c(P_{el})$$

$$D(P_{el}) = 4 \cdot a(P_{el})$$

The coefficients that correspond to the experimental data shown in Figure 3 are given in Table 1 below.

|  | $P_{el} = 40\,W$ | $P_{el} = 90\,W$ | $P_{el} = 125\,W$ |
|---|---|---|---|
| $A(P_{el})$ | 12.28 | 17.67 | 20.75 |
| $B(P_{el})$ | -0.006777 | -0.01099 | -0.014026 |
| $C(P_{el})$ | -6892000 | -5527000 | -4778000 |
| $D(P_{el})$ | 295.1 | 182.0 | 142.6 |

These coefficients can be programmed into a controller as a look up table, such that at each power setting ($P_{el}$) the flow rate (Q) can be computed by the controller using a measured rotational speed ($\omega$).

The rotational speed is one example of a possible parameter of the vacuum cleaner, and which correlates with a flow rate through the vacuum cleaner. For a constant rotational speed setting, the parameter may then comprise a power level. For a pulse-width modulation controlled system, the parameter may comprise a duty cycle ratio.

If the total efficiency of the aggregate and the airflow resistance downstream of the aggregate is constant, then a constant functional relationship exists between the pressure upstream of the filter (P2 in Figure 2), the flow rate (Q) and the electric power (Pel) consumed by the aggregate.

Experiments with a pressure sensor can be performed to obtain an analytical mathematical function for this relationship.

Figure 4 shows experimental results for the pressure upstream P2 of the filter versus the flow rate at three different power settings, 40W, 90W and 125W.

The experimental results show that the pressure (P2) versus the flow rate (Q) can be curve fitted with a linear function where the coefficients depend on the electric power ($P_{el}$):

$$\text{Eq. 4} \qquad P_2\big(Q_{fan}\big) = d(P_{el}) \cdot Q_{fan} + e(P_{el})$$

If Eq. 3 is substituted into Eq. 4, a function for the pressure (P2) is obtained as function of the electric power ($P_{el}$) and rotational speed of the aggregate ($\omega$):

$$\text{Eq. 5} \qquad P_2(P_{el}, \omega) = E(P_{el}) + F(P_{el}) \cdot \sqrt{C(P_{el}) + D(P_{el}) \cdot \omega}$$

The two new coefficients of Eq. 5 are computed by combing the curve fit coefficients of Eq. 2 and Eq. 4:

$$E(P_{el}) = -\frac{b(P_{el}) \cdot d(P_{el})}{2 \cdot a(P_{el})} + e(P_{el})$$

$$F(P_{el}) = -\frac{d(P_{el})}{2 \cdot a(P_{el})}$$

The experimental results of the two additional coefficients that are required to compute the pressure P2 are given in Table 2 below.

| | $P_{el} = 40\,W$ | $P_{el} = 90\,W$ | $P_{el} = 125\,W$ |
|---|---|---|---|
| $E(P_{el})$ | 14.96 | 21.70 | 23.79 |
| $F(P_{el})$ | 0.012018 | 0.026786 | 0.037534 |

Similarly as for the flow rate, these coefficients can be programmed into the controller as a look up table, such that the pressure upstream of the filter (P2) can be computed by the controller using the power setting ($P_{el}$) and the measured rotational speed ($\omega$).

The calculation of the pressure P2 may be considered to comprise implementation of a virtual pressure sensor upstream of the filter, to be used in combination with a real pressure measurement point (relative to atmospheric pressure) upstream of the filter. The controller can then compute an estimated pressure drop ($\Delta P = P2 - P1$) between the two locations using:

$$\text{Eq. 6} \qquad \Delta P(P_{el}, \omega, P_1) = E(P_{el}) + F(P_{el}) \cdot \sqrt{C(P_{el}) + D(P_{el}) \cdot \omega} - P_1$$

This estimated computed pressure drop depends on the flow rate and on the pollution of the filter. By doing experiments, the relations between the pressure drop ($\Delta P$) and the flow rate (Q) can be determined for the cases when the filter is clean and when the filter is considered as full.

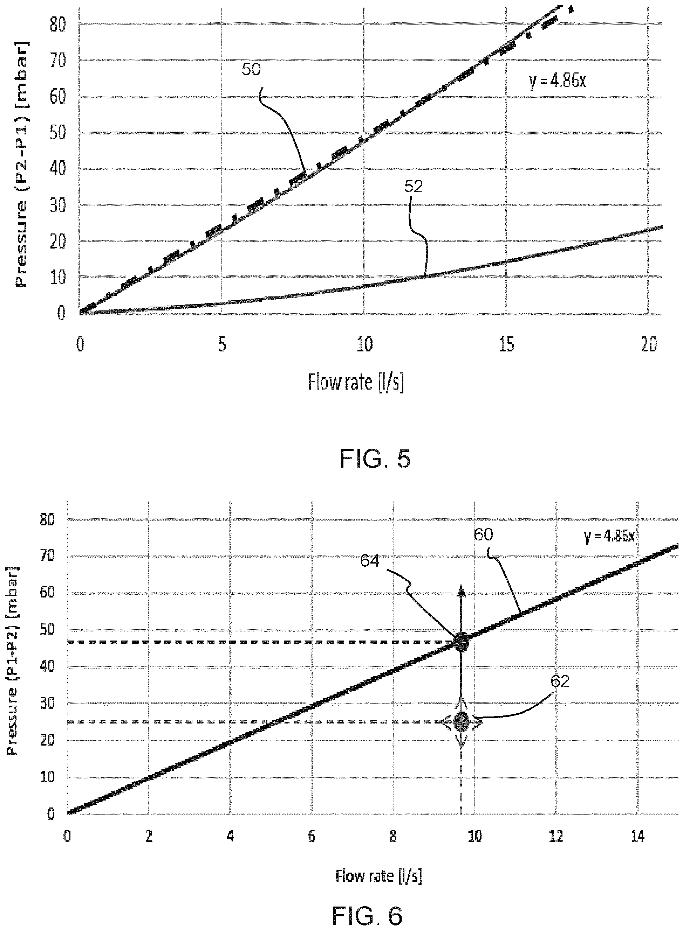

Figure 5 shows experimental results of these measurements, plotting pressure difference versus flow rate, where plot 50 is for a full filter and plot 52 is for a clean filter.

If a filter is becoming polluted, an increasing linear resistance is added to the initial resistance of a clean filter. When the filter is considered as full, the pressure drop will most likely be dominated by the linear resistance of the filter. A linear curve fit of the measured pressure drop versus the flow rate for the full filter is also shown in Figure 5 (the dashed line). This linear approximation can be used to define a threshold relation for the pressure drop versus the flow rate for the full filter:

$$\text{Eq. 7} \qquad \Delta P_{threshold\_FFI\_on} = C_1 \cdot Q_{fan}$$

The proportionality constant $C_1$ may be programmed into the controller. The constant can be tuned such that a filter full indicator will trigger at the most suitable moment. By substituting Eq. 3 into Eq. 7, a function is obtained for the threshold pressure drop depending on the power setting of the vacuum cleaner and the measured rotational speed of the aggregate:

$$\text{Eq. 8} \qquad \Delta P_{threshold\_FFI\_on}(P_{el}, \omega) = C_1 \cdot A(P_{el}) + C_1 \cdot B(P_{el}) \cdot \sqrt{C(P_{el}) + D(P_{el}) \cdot \omega}$$

Note that the threshold pressure drop may only be computed on the controller if the aggregate is operating at a steady state condition, i.e. with no large step in rotational speed between two measured rotational speeds.

The filter full indicator is provided on a user interface, and it can be actuated by the controller if the computed pressure drop is larger than the computed threshold value (Could be also that the filter full indicator is only turned on after a predetermined time of exceeding the threshold value to ensure not providing a false trigger):

$$\text{Eq. 9} \qquad \Delta P(P_{el}, \omega, P_1) > \Delta P_{threshold\_FFI\_on}(P_{el}, \omega)$$

An example of the trigger algorithm is illustrated in Figure 6.

There is single threshold function, plot 60, between the pressure drop and the flow rate. Point 62 shows a measurement point, and point 64 shows a threshold value at which the filter full indicator is triggered. The controller indicates a need for filter cleaning when the combination of pressure drop and flow reaches the first threshold function 60 between the pressure drop and the flow rate, in other words when the measurement point 62 reaches the threshold function 60 (from below).

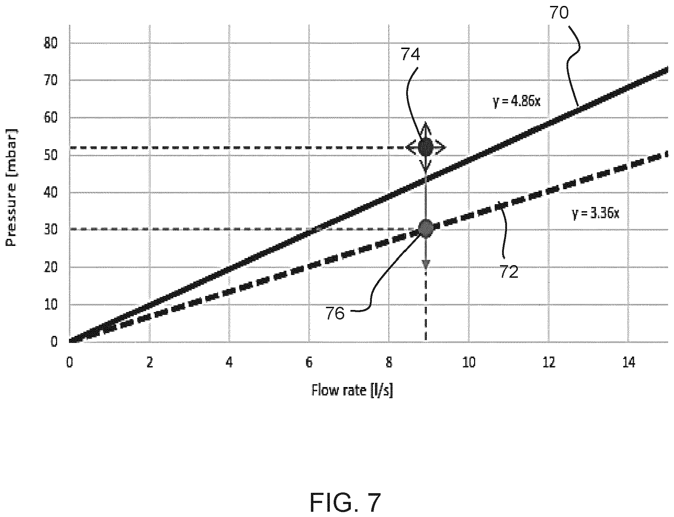

Another example of a trigger algorithm is illustrated in Figure 7. In this case, hysteresis is built into the process.

In this case, there is a first threshold function 70 and a second threshold function 72. Point 74 is a measurement point, and it is above the first function line 70 hence a filter full indicator is provided. The filter full indication is only ended when the pressure drop returns to the second threshold function 72. Thus, the indicator is turned off at point 76.

This means that the filter full indicator will not turn off at the same threshold as when it turns on. The filter full indicator on the user interface will be turned off by the controller if the measured pressure drop is lower than the computed (second) threshold value:

$$\text{Eq. 10} \qquad \Delta P(P_{el}, \omega, P_1) < \Delta P_{threshold\_FFI\_off}(P_{el}, \omega)$$

This second threshold value is again a linear function of the flow rate:

$$\text{Eq. 11} \qquad \Delta P_{threshold\_FFI\_off} = C_2 \cdot Q_{fan}$$

The proportionality constant $C_2$ will also be programmed into the controller and can be tuned such that the filter full indicator will turn off at the most suitable moment.

When maintenance is correctly performed by the consumer and the measured pressure difference is still above the threshold value for turning off the filter full indicator, this information can also be used to inform the consumer that the filter must be replaced with a completely new filter.

The mathematical relations given above describing the triggering procedure of the filter full indicator can be reduced into two mathematical inequality relations. When the first inequality relation is satisfied the controller will turn on the filter full indicator on the user interface of the vacuum cleaner:

$$\text{Eq. 12} \qquad P_1 > K_1(P_{el}) + K_2(P_{el}) \cdot \sqrt{K_3(P_{el}) + K_4(P_{el}) \cdot \omega}$$

When the filter full indicator is turned on the controller will only turn off the filter full indicator when the second inequality relation is satisfied:

$$\text{Eq. 13} \qquad P_1 < K_5(P_{el}) + K_6(P_{el}) \cdot \sqrt{K_3(P_{el}) + K_4(P_{el}) \cdot \omega}$$

Therefore, in this particular example, and with three power settings, the system can be implemented by programming 18 coefficients into the controller (6 for each of the three power settings):

$$K_1(P_{el}) = C_1 \cdot A(P_{el}) - E(P_{el})$$

$$K_2(P_{el}) = C_1 \cdot B(P_{el}) - F(P_{el})$$

$$K_3(P_{el}) = C(P_{el})$$

$$K_4(P_{el}) = D(P_{el})$$

$$K_5(P_{el}) = C_2 \cdot A(P_{el}) - E(P_{el})$$

$$K_6(P_{el}) = C_2 \cdot B(P_{el}) - F(P_{el})$$

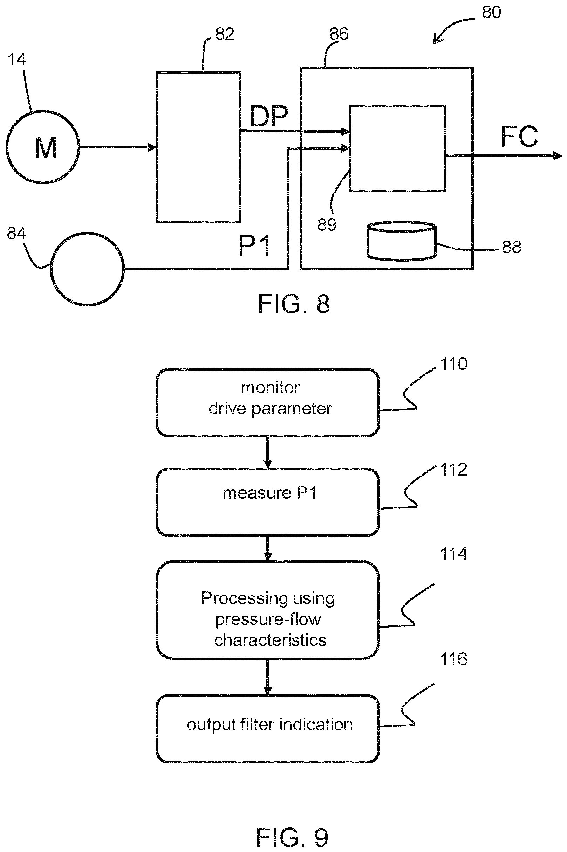

Figure 8 shows a system 80 for indicating when a filter of a vacuum cleaner should be cleaned based on the insights outlined above.

The system 80 comprises an arrangement 82 for monitoring a parameter, such a drive parameter DP, of the vacuum cleaner which correlates with a flow rate through the vacuum cleaner. The parameter in one example, as explained above, is the aggregate rotational speed. A pressure sensor 84 measures the upstream pressure P1.

A controller 86 includes a memory 88 storing pressure-flow characteristics, such as a function relating the flow rate to the parameter. The controller includes a processor 89 which estimates the flow rate from the parameter, derives an estimate of the second pressure P2 downstream of the filter, based on the assumed pressure-flow characteristics of the components downstream of the filter and from the parameter and/or estimated flow rate, and derive a pressure drop across the filter from the first pressure measurement and the estimated second pressure.

An output FC is provided which indicates a need for filter cleaning by monitoring the relationship over time between the derived pressure drop and the estimated flow rate, as explained above.

The memory 88 for example stores a set of pressure-flow characteristics when the vacuum cleaner has multiple power settings, with one member of the set for each of the plurality of different power settings. The invention may however also be applied to a device with only one power setting.

A differential pressure measurement is obtained with only a single pressure measurement point.

In addition, by monitoring a parameter which correlates with a flow rate through the vacuum cleaner, the need for a flow sensor is avoided. In particular, the measurement of the aggregate rotation speed typically does not need any additional sensors, beyond the existing motor hardware, in particular for a brushless DC motor.

Figure 9 shows a method for indicating when a filter of a vacuum cleaner should be cleaned, comprising:

in step 110, monitoring a parameter of the vacuum cleaner which correlates with a flow rate through the vacuum cleaner;
in step 112, measuring a first pressure, upstream of the filter; and
in step 114, performing processing which combines the parameter, the measured first pressure P1 and pressure-flow characteristics, based on an assumed flow resistance downstream of the filter.

An output is provided in step 116 which indicates a need for filter cleaning.

As explained above, the processing in step 114 may involve estimating a flow rate Q from the parameter (and optionally also the power setting) using pressure-flow characteristics relating the flow rate to the parameter, deriving an estimate of a second pressure P2 downstream of the filter (based on an assumed flow resistance downstream of the filter) and deriving a pressure drop ∆P across the filter from the first pressure measurement P1 and the estimated second pressure P2.

A relationship over time between the derived pressure drop and the estimated flow rate may be monitored in order to provide the output which indicates a need for filter cleaning.

The invention is described above with reference to a vacuum cleaner. The invention may be applied to any vacuum cleaner which requires filter maintenance during the lifetime of the vacuum cleaner. This is commonly the case for bag-less vacuum cleaner using a cyclonic separator. However, it may be applied to other types of suction vacuum cleaners. The invention may be applied to a canister type, a stick type, an upright, or a robotic vacuum cleaner. It may also be applied to systems with sweeping functions. The invention may be applied to wet or dry vacuum cleaners.

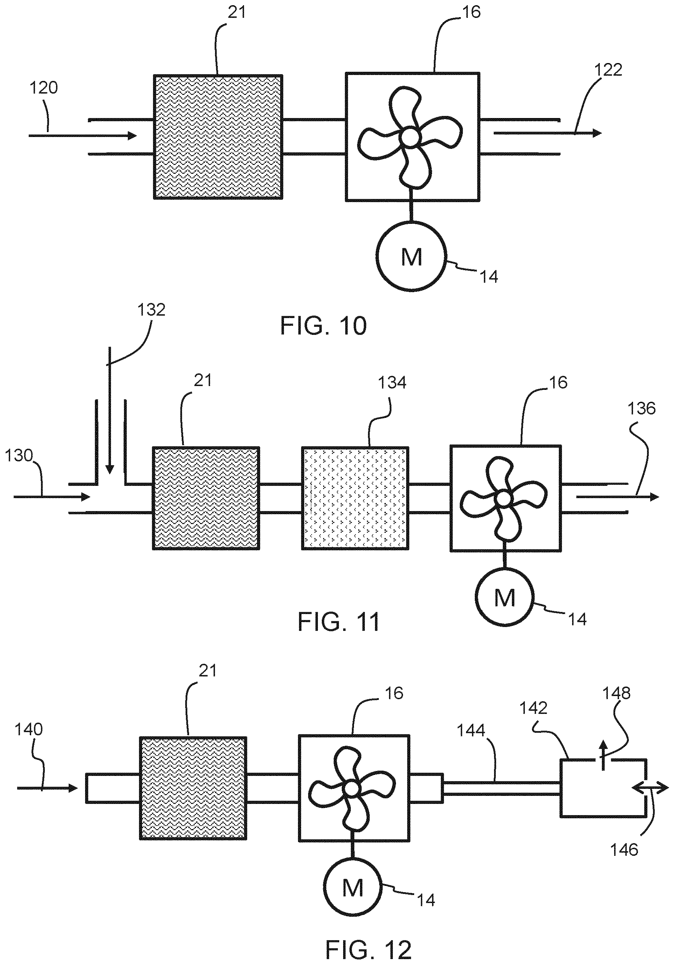

The invention may however also be applied to other types of air treatment device. Figures 10 to 12 show some examples.

Figure 10 shows the general layout of an air cleaner, for example as may be applied to a kitchen cooker hood.

A dirty air inlet flow 120 is provided to a filter 21, and downstream of the filter 21 is an aggregate of a motor 14 and fan 16. An outlet clean air flow 122 is delivered by the aggregate.

Figure 11 shows the general layout of a heating, ventilation and air conditioning (HVAC) system. The system has an inlet for fresh outdoor air 130 and an inlet for return air 132. The inlet flows are provided to a filter 21. Downstream of the filter is an air treatment section 134 (heating, dehumidification, humidification) followed by the aggregate of a motor 14 and fan 16. A treated air flow 136 is delivered by the aggregate.

Figure 12 shows the general layout of a continuous positive airway pressure (CPAP) device. The system has an inlet air flow 140 which is provided to a filter 21, and downstream of the filter is the aggregate of a motor 14 and fan 16. The outlet is delivered to a patient mask 142 by a tube 144. The delivers or receives a patient flow 146 and also has an exit flow 148 through an exhalation valve.

The system and method described above may be applied to these different types of air treatment device. In each case, a flow resistance of the components downstream of the filter 21 can be assumed and the upstream flow resistance may vary. For example, in HVAC systems, the upstream flow resistances can change because of different valve settings of the inlets. A HVAC system can also have multiple inlet ports for multiple rooms, and different valves are controlled differently to obtain the desired air treatment for every room and/or time of the day.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

The method of the invention may be implemented in software, to be run on a processor forming part of the controller of the vacuum cleaner. A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

**Claims**

1. A system for indicating when a filter of an air treatment device should be cleaned, comprising:

   an arrangement (82) for monitoring a parameter of the air treatment device which correlates with a flow rate through the air treatment device, said flow being generated by a fan and motor arrangement;
   a pressure sensor (84) for measuring a first pressure (P1), upstream of the filter;
   a memory (88) storing a pressure-flow characteristics relating to the path downstream of the filter; and
   a processor (89) adapted to:
   combine the monitored parameter, the measured first pressure and the pressure-flow characteristics, based on an assumed fan and motor performance and a flow resistance of any components, other than the fan and motor arrangement, downstream of the filter, to provide an output (FC) which indicates a need for filter cleaning.

2. The system of claim 1, wherein the processor is adapted to:

   estimate a flow rate from the parameter;
   derive an estimate of a second pressure, downstream of the filter, based on the assumed flow resistance downstream of the filter and from the estimated flow rate ;
   derive a pressure drop across the filter from the first pressure measurement and the estimated second pressure; and
   analyze the derived pressure drop and the estimated flow rate to provide an output which indicates a need for filter cleaning.

3. The system of claim 1 or 2, wherein the parameter comprises a fan rotation speed of the air treatment device.

4. The system of any one of claims 1 to 3, wherein the pressure-flow characteristics comprise a set of pressure-flow characteristics for different power settings of the air treatment device, and the processor is adapted to:

   receive a power setting of the air treatment device; and

combine the monitored parameter, the measured first pressure and the pressure-flow characteristics for the particular power setting, to provide the output (FC) which indicates a need for filter cleaning.

5. The system of claim 4, wherein the power setting of the air treatment device is a constant input power setting to a motor of the air treatment device.

6. The system of any one of claims 1 to 5, wherein the processor (89) is adapted to derive a pressure drop across the filter and a flow rate.

7. The system of claim 6, wherein the processor (89) is adapted to indicate a need for filter cleaning when the pressure drop reaches a first threshold function (60) between the pressure drop and the flow rate.

8. The system of claim 7, wherein the processor (89) is adapted to end the indication of a need for filter cleaning when the pressure drop returns to a second threshold function (72) between the pressure drop and the flow rate.

9. The system of claim 8, wherein the processor is adapted to indicate a need for filter replacement if, after filter cleaning, the pressure drop has not returned to the second threshold function (72).

10. A bag-less vacuum cleaner comprising:

   a motor (14);
   a cyclonic dust separator (19);
   a filter (21);
   a filter full output indicator; and
   the system of any one of claims 1 to 9 for controlling the filter full indicator.

11. The vacuum cleaner of claim 10, wherein the components downstream of the filter (21) have constant flow resistance over time.

12. The vacuum cleaner of claim 10 or 11, wherein the motor (14) comprises a brushless DC motor.

13. A method for indicating when a filter of an air treatment device should be cleaned, comprising:

   (110) monitoring a parameter of the air treatment device which correlates with a flow rate through the air treatment device, said flow being generated by a fan and motor arrangement;
   (112) measuring a first pressure (PI), upstream of the filter;
   (114) combining the parameter, the measured first pressure (P1) and pressure-flow characteristics, based on an assumed flow resistance of any components, other than the fan and motor arrangement, downstream of the filter, to provide an output (FC) which indicates a need for filter cleaning.

14. The method of claim 13, wherein the pressure-flow characteristics comprise characteristics for a set of different power settings of the air treatment device, and the method comprises receiving a power setting of the air treatment device.

15. A computer program comprising computer program code which is adapted, when said program is run on a computer, to implement the method of claim 13 or 14.

FIG. 1

P1

P2

12,24

18

21

14,16

40

42

FIG. 2

FIG. 3

FIG. 4

FIG. 5

FIG. 6

FIG. 7

FIG. 8

FIG. 9

FIG. 10

FIG. 11

FIG. 12

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2021/259494 A1 (PRUIETT JASON W [US]) 26 August 2021 (2021-08-26)<br>* paragraphs [0072], [0080]; claims 1,13,16, 18, 19; figures 1,3,12 *<br>----- | 1,3, 13-15<br>2,4-12 | INV.<br>B01D46/00<br>B01D35/143<br>B01D37/04<br>B01D46/44 |
| A,D | WO 2015/078672 A1 (KONINKL PHILIPS NV [NL]) 4 June 2015 (2015-06-04)<br>* the whole document *<br>----- | 1-15 | |
| A | WO 2009/132182 A1 (CARRIER CORP [US]; GUZMAN PETER P [US] ET AL.) 29 October 2009 (2009-10-29)<br>* claims 1,4; figure 2 *<br>----- | 1-15 | |
| A | US 6 167 588 B1 (DYSON JAMES [GB]) 2 January 2001 (2001-01-02)<br>* column 3, line 51 - column 4, line 32; figure 2c *<br>----- | 1-15 | |
| A | FR 2 848 874 A1 (DAIMLER CHRYSLER AG [DE]) 25 June 2004 (2004-06-25)<br>* the whole document *<br>----- | 1-15 | TECHNICAL FIELDS SEARCHED (IPC)<br><br>B01D<br>A47L |

The present search report has been drawn up for all claims

| Place of search | Date of completion of the search | Examiner |
|---|---|---|
| Munich | 2 June 2022 | Nikolaou, Ioannis |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 21 6098

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2022

| Patent document cited in search report | | Publication date | Patent family member(s) | | Publication date |
|---|---|---|---|---|---|
| US 2021259494 | A1 | 26-08-2021 | AU | 2020260510 A1 | 20-05-2021 |
| | | | AU | 2022200908 A1 | 03-03-2022 |
| | | | CA | 3111138 A1 | 06-05-2021 |
| | | | CN | 112754349 A | 07-05-2021 |
| | | | CN | 214511004 U | 29-10-2021 |
| | | | EP | 3818920 A1 | 12-05-2021 |
| | | | EP | 3973841 A1 | 30-03-2022 |
| | | | ES | 2903222 T3 | 31-03-2022 |
| | | | JP | 6974576 B2 | 01-12-2021 |
| | | | JP | 2021074544 A | 20-05-2021 |
| | | | KR | 20210054993 A | 14-05-2021 |
| | | | PL | 3818920 T3 | 02-05-2022 |
| | | | PT | 3818920 T | 17-12-2021 |
| | | | US | 2021038041 A1 | 11-02-2021 |
| | | | US | 2021259494 A1 | 26-08-2021 |
| WO 2015078672 | A1 | 04-06-2015 | CN | 105744871 A | 06-07-2016 |
| | | | EP | 3073883 A1 | 05-10-2016 |
| | | | JP | 6100977 B2 | 22-03-2017 |
| | | | JP | 2016540633 A | 28-12-2016 |
| | | | PL | 3073883 T3 | 30-09-2019 |
| | | | RU | 2016117736 A | 10-11-2017 |
| | | | TR | 201908589 T4 | 22-07-2019 |
| | | | US | 2016256026 A1 | 08-09-2016 |
| | | | WO | 2015078672 A1 | 04-06-2015 |
| WO 2009132182 | A1 | 29-10-2009 | CN | 102016266 A | 13-04-2011 |
| | | | EP | 2283219 A1 | 16-02-2011 |
| | | | US | 2011094297 A1 | 28-04-2011 |
| | | | WO | 2009132182 A1 | 29-10-2009 |
| US 6167588 | B1 | 02-01-2001 | AT | 218299 T | 15-06-2002 |
| | | | AU | 720072 B2 | 25-05-2000 |
| | | | CA | 2275513 A1 | 02-07-1998 |
| | | | DE | 69713150 T2 | 27-02-2003 |
| | | | EP | 0951230 A1 | 27-10-1999 |
| | | | ES | 2176802 T3 | 01-12-2002 |
| | | | GB | 2320419 A | 24-06-1998 |
| | | | JP | 2001506894 A | 29-05-2001 |
| | | | US | 6167588 B1 | 02-01-2001 |
| | | | WO | 9827857 A1 | 02-07-1998 |
| FR 2848874 | A1 | 25-06-2004 | DE | 10260784 A1 | 01-07-2004 |
| | | | FR | 2848874 A1 | 25-06-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015078672 A